(19) Europäisches Patentamt
European Patent Office
Office européen des brevets

(11) Numéro de publication : **0 324 362 B1**

# (12) FASCICULE DE BREVET EUROPEEN

(45) Date de publication du fascicule du brevet : **17.06.92 Bulletin 92/25**

(51) Int. Cl.$^5$ : **G02B 6/28,** H04Q 3/52

(21) Numéro de dépôt : **89100086.1**

(22) Date de dépôt : **04.01.89**

## (54) Diffuseur optique du type N par N.

(30) Priorité : **08.01.88 FR 8800134**

(43) Date de publication de la demande : **19.07.89 Bulletin 89/29**

(45) Mention de la délivrance du brevet : **17.06.92 Bulletin 92/25**

(84) Etats contractants désignés : **AT BE CH DE ES FR GB IT LI NL SE**

(56) Documents cités :
**ELECTRONICS LETTERS, vol. 21, no. 11, 23 mai 1985, pages 482-484, Stevenage, Herts, GB; Y. KOKUBUN et al.: "Mesh waveguideoptical star coupler"**
**INTERNATIONAL SWITCHING SYMPOSIUM 1987, "Innovations in switching technology", Phoenix, Arizona, 15-20 mars 1987, pages0999-1003, IEEE, New York, US; T. SHIMOE et al.: "A path-independent-insertion-loss optical space switching network"**

(56) Documents cités :
**INTERNATIONAL SWITCHING SYMPOSIUM 1987, "Innovations in switching technology", Phoenix, Arizona, 15-20 mars 1987, pages0994-0998, IEEE, New York, US; H. WALTER: "Optical switching, using different switching principles"**
**ELECTRONICS LETTERS, vol. 21, no. 11, 23 mai 1985, pages 502-504, Stevenage, Herts, GB; D.B. MORTIMORE: "Low-loss 8 x 8single-mode star coupler"**
**Optics Letters, vol. 9, no. 8, Aout 1984, pp 368-70**

(73) Titulaire : **ALCATEL CIT**
**12 Rue de la Baume**
**F-75008 Paris (FR)**

(72) Inventeur : **Le Roy, Guy**
**Kerwegan-Servel**
**F-22300 Lannion (FR)**
Inventeur : **Fraise, Muguette**
**Le Clos Salvert Route de Bièvres**
**F-91370 Verrieres Le Buisson (FR)**

(74) Mandataire : **Weinmiller, Jürgen et al**
**Lennéstrasse 9 Postfach 24**
**W-8133 Feldafing (DE)**

EP 0 324 362 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne les diffuseurs optiques du type N par N dans lesquels les signaux optiques provenant de N fibres d'entrée sont acheminés sur N fibres de sortie, de sorte que sur chacune des fibres de sortie on retrouve les N signaux optiques des N fibres d'entrée.

Les diffuseurs optiques sont constitués d'un assemblage de coupleurs 2 par 2, c'est-à-dire ayant deux entrées et deux sorties, de tels coupleurs étant de tout type connu, et bien connus de l'homme de l'art.

Le principe d'assemblage de coupleurs 2 par 2 en réseaux à étages multiples pour réaliser des diffuseurs de grande capacité est connu : l'article de M.E. MARHIC : "Hierarchic and combinatorial star couplers", Optics Letters, vol 9, N° 8, août 1984, pages 368 à 370, décrit l'assemblage possible de coupleurs élémentaires (coupleurs 2 par 2) par des mailles soudées, mais le diffuseur ainsi constitué présente un affaiblissement élevé dû au cumul des affaiblissements des raccordements des maillages successifs. Une possibilité permettant de réduire l'affaiblissement entre entrée et sortie du diffuseur consiste à diminuer le nombre des raccordements en combinant directement $2^n$ longueurs de fibres pour réaliser les coupleurs d'un diffuseur. Cependant l'auteur ne décrit pas d'organisation pratique ni de procédé de réalisation de tels diffuseurs ; l'article de D.B. MORTIMORE "Low-loss 8x8 single-mode star coupler", Electronics Letters mai 1985, vol 21, N° 11, pages 502 à 504, décrit un coupleur étoile du type 8 par 8 constitué de trois colonnes de quatre coupleurs.

Les diffuseurs N par N ont une structure plane et sont réalisés en interconnectant entre eux deux diffuseurs N/2 par N/2 par des coupleurs ; par exemple un diffuseur 8 par 8 est réalisé en interconnectant deux diffuseurs 4 par 4 par quatre coupleurs.

Les diffuseurs connus réalisés avec des longueurs de fibre selon une structure plane présentent plusieurs inconvénients.

- Les sorties des fibres ne sont pas ordonnées, c'est-à-dire qu'elles n'ont pas le même ordre de succession à la sortie qu'à l'entrée.
- Les longueurs sont différentes d'une fibre à l'autre, en conséquence les temps de propagation des signaux et leur affaiblissement ne sont pas identiques.
- Les trajets sont différents et complexes, ce qui, pour un nombre de fibres important ne permet par une réalisation automatique simple.

L'invention a pour but de réaliser, à partir de $N=2^n$ conduits lumineux, un diffuseur N par N dans lequel les conduits lumineux ont même longueur entre l'entrée et la sortie du diffuseur.

Un autre but de l'invention est de réaliser un diffuseur N par N dans lequel les conduits lumineux ont des trajets identiques.

Un autre but de l'invention est de réaliser un diffuseur N par N dans lequel l'ordre de succession des conduits lumineux en sortie du diffuseur est le même qu'en entrée.

Un autre but de l'invention est réaliser un diffuseur N par N pouvant être fabriqué automatiquement par une machine dérivée des machines connues en câblerie.

L'invention a pour objet un diffuseur optique du type N par N, avec $N = 2^n$, ayant n étages de chacun N/2 coupleurs réalisés chacun par couplage de deux conduits lumineux, ledit diffuseur étant réalisé à partir de N conduits lumineux dont les extrémités constituent les entrées et les sorties du diffuseur, caractérisé par le fait que les conduits lumineux constituent deux ensembles de N/2 conduits lumineux chacun, à raison d'un conduit lumineux sur deux, que lesdits ensembles sont enroulés hélicoïdalement sur un cylindre, en sens inverse l'un de l'autre selon des hélices ayant même pas, chaque conduit lumineux d'un ensemble croisant les N/2 conduits lumineux de l'autre ensemble, et qu'un conduit lumineux d'un ensemble est couplé à n conduits lumineux de l'autre ensemble aux croisements de numéro $2^q$, avec q = 0, 1, 2,... (n- 1), dudit conduit lumineux avec les N/2 conduits lumineux de l'autre ensemble.

L'invention va être décrite ci-après à l'aide d'un exemple de réalisation dans lequel les conduits lumineux sont des fibres optiques, illustré par les figures annexés dans lesquelles :

- la figure 1 représente symboliquement un diffuseur optique N par N de l'invention,
- la figure 2 est un développement du diffuseur de la figure 1, qui représente le principe d'enroulement des fibres et les coupleurs,
- la figure 3 est un développement d'un diffuseur de l'invention dans le cas de N = 32,
- la figure 4 représente symboliquement un coupleur du diffuseur de l'invention.
- les figures 5 et 6 représentent respectivement, en développement, un mandrin cylindrique et un diffuseur réalisé avec ledit mandrin, dans le cas d'un diffuseur 16 par 16,
- la figure 7 représente une réalisation d'un dispositif de raccordement d'un diffuseur à deux têtes de câbles.

La figure 1 représente symboliquement un diffuseur N par N, avec $N = 2^n$, qui se présente sous la forme d'un cylindre 1 sur lequel sont enroulées des fibres optiques dont les entrées et les sorties sont régulièrement réparties sur deux cercles de base, 2 et 3, du cylindre.

La figure 2 représente le développement du cylindre 1 de la figure 1, à partir de la ligne YY′, selon la flèche F, le début du développement étant repéré AA′ et la fin du développement étant repérée BB′ ; cette figure 2 illustre le principe de l'enroulement des fibres sur le cylindre.

Les fibres optiques sont réparties, pour l'enroulement, en deux ensembles de fibres de N/2 fibres chacun, à raison d'une fibre sur deux, les deux ensembles de fibres étant enroulés hélicoïdalement sur le cylindre, en sens inverse l'un de l'autre, les hélices ayant même pas ; les deux ensembles de fibres forment un maillage dont les mailles sont en forme de losange.

Les entrées Eo à E(N-1) du diffuseur sont constituées par une extrémité des fibres Fo à (F(N-1), en numérotant les fibres à partir d'une fibre enroulée selon une hélice à droite et dans le même sens que celle-ci. Chaque fibre F2p, avec p = 0, 1, 2, ... (N/2-1), est associée successivement avec les fibres F [ $(2p+2^m-1)$ modulo N] , avec m = 1, 2, 3, ...n, enroulées selon une hélice à gauche pour constituer des couplers élémentaires, (coupleurs 2 par 2) ; le diffuseur comprend n étages C1 à Cn, de N/2 coupleurs chacun, et m est donc un numéro d'étage. La fibre F2p = Fo pour p = o est donc associée dans l'étage C1, (m =1), à la fibre F1, dans l'étage C2, (m = 2), à la fibre F3, dans l'étage C3, (m = 3), à la fibre F7, dans l'étage C4, (m = 4), à la fibre F15, et dans l'étage Cn, (m = n), à la fibre F (N-1). Les sorties So à S (N-1) sont constituées par une autre extrémité des fibres Fo à F (N-1) ; les fibres sont dans le même ordre qu'à l'entrée, mais les sorties sont décalées par rapport aux entrées, la sortie Si correspondant à la fibre Fo, la sortie S(i+1) à la fibre F1 et ainsi de suite, la sortie S(i-1) correspondant à la fibre F (N-1).

La figure 3 est un développement du cylindre de la figure 1 dans le cas d'un diffuseur à $N = 32 = 2^5$ fibres. Ce diffuseur a donc n = 5 étages C1 à C5 de N/2 = 16 coupleurs chacun. Dans cette figure 3 les sorties S17 à S31 correspondent aux fibres F0 à F14 respectivement, et les sorties So à S16 correspondent aux fibres F15 à F31, respectivement. Comme indiqué précédemment une fibre F2p est associée successivement avec une fibre F[$(2p+2^m-1)$ modulo 32], avec m = 1, 2, 3, 4, 5 ; par exemple la fibre F30, pour p = N/2-1 = 16-1 = 15, est associée successivement dans l'étage C1, (m =1), à la fibre F (30+1) = F31, dans l'étage C2, (m = 2), à la fibre F[(30+4-1) modulo 32] = F1, dans l'étage C3, (m = 3), à la fibre F [(30+8-1) modulo 32] = F5, dans l'étage C4, (m = 4), à la fibre F [(30+16-1) modulo 32] = F 13, et dans l'étage C5, (m = 5), à la fibre F[(30+32-1) modulo 32] = F29.

Dans les figures 2 et 3, les fibres ont été numérotées à partir d'une fibre enroulée selon une hélice à droite, ce qui permet de déterminer tous les coupleurs à réaliser pour le diffuseur.

Le diffuseur étant constitué par deux ensembles de fibres enroulés en sens inverse l'un de l'autre il est parfaitement symétrique, de sorte que l'on peut numéroter les N fibres à partir d'une fibre enroulée selon une hélice à gauche, les fibres étant numérotées dans le même sens, donc en sens inverse des exemples illustrés par les figures 2 et 3 ; les formules précédentes pour déterminer les fibres associées pour réaliser des coupleurs s'appliquent aux fibres enroulées selon une hélice à gauche, et l'on retrouve bien évidemment les mêmes coupleurs que précédemment.

Il en résulte que pour connaître les fibres associées dans les coupleurs à une fibre donnée, on numérote les N fibres de Fo à F (N-1) dans le même sens que le sens d'enroulement de ladite fibre prise pour origine et désignée par Fo ; les fibres associées pour réaliser les coupleurs ont pour numéros $2^m-1$, avec m = 1, 2, ..n, et $N = 2^n$. Ceci correspond bien à la formule donnée précédemment F [$(2p+2^m-1)$ modulo 32] qui donne les numéros des fibres associées à la fibre F2p ; en faisant p = o on obtient les numéros des fibres associées à la fibre Fo, c'est-à-dire à la fibre prise pour origine de la numérotation, qui sont F $(2^1-1)$ = F1, F $(2^2-1)$ = F3, F $(2^3-1)$ = F7,... F $(2^n-1)$ = F (N-1).

Chaque fibre d'un ensemble de fibres est donc couplée successivement à n fibres de l'autre ensemble de fibres, puisque m = 1, 2,..n, et m est dit numéro d'étage car pour une même valeur de m tous les coupleurs correspondant sont situés sur une même couronne du cylindre, et il y a N/2 coupleurs par étage puisqu'un ensemble de fibres comporte N/2 fibres. Chaque fibre d'un ensemble croise les N/2 fibres de l'autre ensemble et les coupleurs sont situés aux croisements d'ordre $2^q$, avec q = 0, 1, 2,..(n-1), d'une fibre avec les N/2 fibres de l'autre ensemble de fibres, c'est-à-dire avec les fibres de numéro 1, 2, 4, ... N/2 de l'autre ensemble de fibres ; les coupleurs correspondant à ces croisements sont situés successivement sur les étages C1, C2,...Cn . En effet, une fibre Fo prise pour origine est associée, pour réaliser un coupleur, aux fibres F $(2^m-1)$ et comme m = 1, 2,...n, il y a n coupleurs avec les fibres F1, F3, F7, F (N-1), les croisements de la fibre Fo avec lesdites fibres F1, F3, F7,...F (N-1) étant les premier, deuxième, quatrième,...$2^{(n-1)}$ croisements de la fibre Fo avec les N/2 fibres de l'autre ensemble de fibres. Pour une même valeur de q les coupleurs correspondants, qui sont au nombre de N/2, constituent un étage du diffuseur, et du fait que les deux ensembles de fibres sont enroulés en sens inverse avec même pas d'hélice, tous les coupleurs d'un étage sont situés sur une couronne du cylindre. Les croisements de numéro $2^q$ constituent un étage de numéro m ; les paramètres q et m sont liés par la relation q = m-1.

Les deux ensembles de fibres étant enroulés en sens inverse avec même pas d'hélice, et les coupleurs du dernier étage Cn étant constitués par deux fibres Fo et F (N-1) dont les entrées sont contigües et qui se croisent pour la première fois, les sorties desdites fibres sont décalées d'un demi-pas par rapport aux entrées ; sur la figure 3, les sorties des fibres Fo et F31 sont décalées d'un demi-pas par rapport aux entrées Eo et E31 ; il en est de même pour toutes les fibres, ce qui donne en sortie la même succession des fibres qu'à l'entrée, avec un décalage d'un demi-pas d'hélice.

Les coupleurs sont donc placés sur des couronnes réparties sur le cylindre, à des positions repérables en fonction du pas hélicoïdal d'enroulement des fibres et des longueurs des coupleurs. Ils sont régulièrement répartis sur les couronnes selon un pas angulaire $\alpha = 4 \pi/N$. Les coupleurs des étages 2 à n, repères C2 à Cn, sont situés sur N/2 génératrices du cylindre, espacées d'un pas angulaire $\alpha$. Les coupleurs du premier étage C1 sont situés, angulairement entre deux coupleurs successifs des étages C2 à Cn ; ils sont donc décalés angulairement d'un demi-pas angulaire $\alpha/2$ par rapport aux coupleurs des étages C2 à Cn.

Les N/2 fibres d'un ensemble de fibres étant enroulées hélicoïdalement avec le même pas, leur longueur entre l'entrée et la sortie du diffuseur est la même, et leur trajet est identique ; en effet si l'on considère le développement du diffuseur figures 2 et 3, les trajets sont pour chaque ensemble de fibres des droites parallèles entre elles. Les deux ensembles ayant même pas d'hélice, il en résulte que les N fibres du diffuseur ont même longueur entre entrée et sortie de celui-ci, et que les trajets des fibres des deux ensembles sont identiques, puisque dans le développement du diffuseur, figures 2 et 3, chaque trajet est une droite reliant une entrée à une sortie, chaque droite ayant même angle d'inclinaison par rapport aux généra trices du cylindre, qui dans ces figures sont des droites parallèles à AA′ et BB′.

Ces propriétés géométriques du diffuseur de l'invention permettent une automatisation des enroulements et des coupleurs (dénudage des fibres, toronnage, traitement thermique des parties toronnées) et une production en continu de diffuseurs identiques, à partir de fibres de grande longueur ; on remarquera en effet qu'après le nième étage, Cn, on peut continuer à enrouler les fibres et réaliser les coupleurs des étages C1 à Cn d'un autre diffuseur ; la séparation entre deux diffuseurs successifs sera faite par exemple par tronçonnage entre les sorties d'un diffuseur et les entrées du diffuseur suivant.

La figure 4 représente symboliquement un coupleur élémentaire du diffuseur, réalisé par exemple par toronnage, sur une longueur L de deux fibres Fi et Fj, les fibres étant préalablement dénudées à l'endroit du toronnage, ledit toronnage étant ensuite soumis à un traitement thermique. Cette réalisation d'un coupleur élémentaire de type 2 par 2 par toronnage, n'est qu'un exemple, les coupleurs pouvant être également réalisés par polissage ou par étirage ou par tout autre moyen connu de l'homme de l'art.

Les figures 5 et 6 représentent, respectivement en développement un mandrin cylindrique et un diffuseur réalisé avec ledit mandrin, dans le cas d'un diffuseur 16 par 16.

Le mandrin comporte, pour un diffuseur 16 par 16, $N = 16 = 2^4$, $2N = 32$ rainures longitudinales, Ro à R31, 8 rainures hélicoïdales dextrogyres RD1 à RD8, et 8 rainures héliocoïdales lévogyres RL1 à RL8. En entrée du diffuseur les fibres sont logées dans une sur deux des rainures longitudinales Ro à R31, sur une certaine longueur, jusqu'à leur rencontre avec une rainure hélicoïdale dans laquelle elles sont alors logées. Dès que deux fibres se croisent, elles sont associées pour former un coupleur de l'étage C1 ; les fibres Fo et F1 forment un coupleur, les fibres F2 et F3 forment un autre coupleur de l'étage C1, les fibres F14 et F15 forment un autre coupleur ; chaque coupleur est logé dans la rainure longitudinale qui passe par le point de recontre de deux fibres, et sa longueur est égale à la diagonale d'une maille constituée par les rainures héliocoïdales dextrogyres et levogyres. En sortie d'un coupleur chaque fibre est logée dans la rainure héliocoïdale dont le sens d'enroulement correspond à celui de la fibre.

Chaque fibre d'un ensemble croise les $N/2 = 8$ fibres de l'autre ensemble, et comme indiqué précédemment les coupleurs sont réalisés aux croisements de numéros $2^q$, avec q = 0, 1, 2...(n-1), ce qui donne les croisements 1, 2, 4, 8 avec les fibres de l'autre ensemble. L'étage C1 correspond aux premiers croisements, l'étage C2 aux deuxièmes croisements, l'étage C3 aux quatrièmes croisements, et l'étage C4 aux huitièmes croisements.

En reprenant l'exemple de la fibre Fo, ladite fibre après sa sortie du coupleur de l'étage C1 va croiser une rainure héliocoïdale qui sera la deuxième qu'elle croise, et elle sera couplée avec la fibre logée dans cette rainure hélicoïdale pour constituer un coupleur de l'étage C2. En sortie du coupleur de l'étage C2 la fibre Fo va croiser deux autres rainures hélicoïdales et elle sera couplée à la fibre logée dans la deuxième rainure qui constitue le quatrième croisement, pour constituer un coupleur de l'étage C3. En sortie du coupleur de l'étage C3, la fibre Fo va croiser quatre rainures héliocoïdales et sera couplée avec la fibre logée dans la quatrième rainure, c'est le huitième croisement, pour constituer un coupleur de l'étage C4 ; dans ce coupleur la fibre Fo est couplée à la fibre F15 qui est bien la dernière fibre de l'autre ensemble de fibres. On notera qu'à l'intersection de deux rainures héliocoïdales on a soit un simple croisement de deux fibres, soit l'entrée d'un coupleur, soit la sortie d'un coupleur ; on compte donc comme croisement de fibres le croisement des rainures hélicoïdales entre deux coupleurs, et le croisement desdites rainures à l'entrée d'un coupleur ; par contre en sortie d'un coupleur, l'intersection des rainures hélicoïdales n'est pas considérée comme un croisement car les deux fibres du coupleur divergent, et comme les coupleurs d'un étage sont disposés dans une couronne selon les diagonales des mailles formées par les rainures hélicoïdales, il n'y a par conséquent pas en sortie d'un coupleur d'autre fibre que les deux fibres constituant ledit coupleur. La figure 6 représente en développé le diffuseur réalisé sur le mandrin cylindrique de la figure 5, mais sans les rainures longitudinales ni les rainures hélicoïdales ; cette figure 6 représente donc uniquement les trajets des 16 fibres du diffuseur. Il apparaît nettement dans cette figure que chaque fibre conserve son sens d'enroulement en sortie de chaque coupleur, mais qu'elle est décalée de la longueur d'un coupleur (diagonale d'une maille). En sortie du diffuseur les fibres ont le même ordre qu'à l'entrée et sont décalées d'un demi-tour du cylindre.

Dans les figures 2 et 3, qui sont des représentations schématiques d'un diffuseur, les coupleurs sont représentés de manière ponctuelle, de sorte que les sorties des fibres sont décalées d'un demi-pas des hélices par rapport aux entrées, et que la longueur du cylindre, donc du diffuseur, est fonction du pas des hélices, mais que le décalage entre les entrées et les sorties est indépendant du pas des hélices.

Dans la réalisation illustrée par les figures 5 et 6, il en est de même : seule la longueur du diffuseur est fonction du pas des hélices, cette longueur étant égale à un demi-pas augmenté de quatre fois la longueur d'une diagonale d'une maille, puisqu'il y a quatre étages de coupleurs dans ces figures. Dans le cas d'un diffuseur N par N, avec $N = 2^n$, il y a n étages de coupleurs, et la longueur d'un diffuseur est égale à un demi-pas des hélices augmenté de n fois la longueur d'une diagonale d'une maille.

La longueur d'une diagonale d'une maille, donc des coupleurs, dépend du pas des hélices, et réciproquement ; pratiquement c'est la longueur des coupleurs qui imposera le pas des hélices.

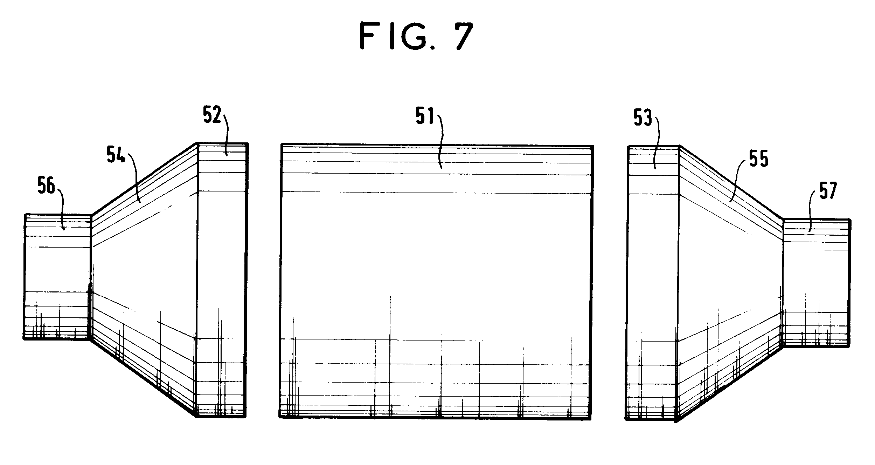

La figure 7 représente, à titre d'exemple, un dispositif de raccordement d'un diffuseur à une tête de câble d'entrée et une tête de câble de sortie. La tête de câble d'entrée est constituée par une couronne cylindrique 52 et un tronc de cône 54 situé en extrémité d'un câble de fibres optiques 56 ; la tête de câble de sortie est constituée par une couronne cylindrique 53 et un tronc de cône 55 situé en extrémité d'un câble de fibres optiques 57. Les couronnes cylindriques 52 et 53 sont obtenues par tronçonnage des extrémités du mandrin 51 qui supporte le diffuseur de l'invention, de sorte que les couronnes sont rainurées longitudinalement au même pas que ledit mandrin 51. Dans cette figure les rainures longitudinales et les rainures hélicoïdales du mandrin 51 et des couronnes 52, 53 ne sont pas représentées, pour plus de clarté ; ces rainures sont illustrées figure 5. Les câbles 56 et 57 ont N fibres chacun et ces fibres sont réparties sur le tronc de cône correspondant, 54 ou 55, et insérées dans les rainures longitudinales de la couronne, 52 ou 53, associée à chaque tronc de cône. Le diffuseur N par N étant réalisé sur le mandrin 51, la continuité optique entre les fibres du diffuseur et celles des câbles 56 et 57 est obtenue soit par juxtaposition des faces cylindriques du mandrin et des couronnes, lesdites faces ayant été polies après montage des fibres dans les rainures, les couronnes et le mandrin comportant des moyens de positionnement pour aligner les extrémités des fibres du mandrin et des couronnes, soit par soudure des fibres à raccorder après juxtaposition du mandrin et des couronnes.

Le diffuseur de l'invention peut être réalisé à l'aide de fibres optiques monomode ou multimode, ou encore à l'aide de fibres plastiques, donc d'une manière générale à l'aide de conduits lumineux dès lors qu'ils permettent de réaliser des coupleurs.

Le terme de conduit lumineux s'applique également à l'optique intégrée, par dépôt de matériau optiquement conducteur soit dans les rainures longitudinales et hélicoïdales du mandrin cylindrique conformément aux figures 5 et 6 dans lesquelles les fibres seraient remplacées par ledit matériau, soit sur la surface du mandrin selon le motif des trajets du diffuseur représenté en figure 6, le mandrin servant de support.

Le diffuseur selon l'invention trouve des applications dans les dispositifs de télécommunications à grande capacité, comme par exemple le dispositif du brevet français 2586874 dont le volume d'interconnexion peut être un diffuseur de l'invention, ou encore le dispositif du brevet français 2593654 dont le répartiteur optique passif peut être également un diffuseur de l'invention.

## Revendications

1. Diffuseur optique du type N par N, avec $N = 2^n$, ayant n étages(C1, C2...C11) de chacun N/2 coupleurs réalisés chacun par couplage de deux conduits lumineux, ledit diffuseur étant réalisé à partir de N conduits lumineux (F0,F1,F2....F(N-1)) dont les extrémités constituent les entrées et les sorties du diffuseur, caractérisé par le fait que les conduits lumineux constituent deux ensembles (F0,F2....F(N-2); F1,F3... F(N-1)) de N/2 conduits lumineux chacun, à raison d'un conduit lumineux sur deux, que lesdits ensembles sont enroulés hélicoïdalement sur un cylindre (1), en sens inverse l'un de l'autre selon des hélices ayant même pas, chaque conduit lumineux d'un ensemble croisant les N/2 conduits lumineux de l'autre ensemble, et qu'un conduit lumineux d'un ensemble est couplé à n conduits lumineux de l'autre ensemble aux croisements de numéro $2^q$, avec q = 0, 1, 2,... (n-1), dudit conduit lumineux avec les N/2 conduits lumineux de l'autre ensemble.

2. Diffuseur optique selon la revendication 1, caractérisé par le fait que les deux ensembles de conduits lumineux constituent des mailles et que les coupleurs sont réalisés selon une diagonale des mailles parallèle à une génératrice du cylindre (1).

3. Diffuseur optique selon l'une des revendications 1 et 2, caractérisé par le fait que les extrémités d'un conduit lumineux qui constituent une entrée et une sortie du diffuseur sont décalées d'un demi-pas d'une hélice, et que les sorties ont même ordre de succession que les entrées.

4. Diffuseur optique selon l'une des revendications 1, 2 et 3, caractérisé par le fait que le cylindre (1) comporte des rainures longitudinales (R0, R1...R31) et des rainures hélicoïdales(RL1...RL8; RD1....RD8), que les extrémités de chaque conduit lumineux sont disposées dans des rainures longitudinales, que les coupleurs sont disposés dans des rainures longitudinales, et que les conduits lumineux sont disposés dans les rainures hélicoïdales entre les entrées et un premier étage de coupleurs, entre deux étages successifs de coupleurs, et entre un dernier étage de coupleurs et les sorties du diffuseur.

5. Dispositif de raccordement d'un cable d'entrée (56) à un câble de sortie (57) comportant chacun N conduits lumineux, au moyen du diffuseur selon la revendication 4, caractérisé par le fait que ledit diffuseur est racordé d'un côté audit câble d'entrée (56) par une tête de câble d'entrée et d'un autre côté audit câble de sortie (57) par une tête de câble de sortie, chacune desdites têtes étant constituée par une couronne cylindrique (52 ; 53) et un tronc de cône (54 ; 55), que chaque couronne cylindrique est obtenue par tronçonnage du cylindre (1) du diffuseur comportant au moins les rainures longitudinales, et que les N conduits lumineux de chaque câble d'entrée et sortie sont répartis sur un tronc de cône respectif, les N conduits lumineux ayant des extrémités disposées dans les rainures longitudinales de la couronne associée au tronc de cône, et que les rainures longitudinales des couronnes et du cylindre du diffuseur sont alignées.

**Patentansprüche**

1. Optischer Verteiler vom Typ NxN, mit $N = 2^n$, der n Stufen (C1, C2, ... Cn) mit jeweils N/2 Kopplern aufweist, die je durch Koppeln zweier Lichtleiter gebildet sind, wobei der Verteiler aus N Lichtleitern (F0, F1, F2, ... FN-1) aufgebaut ist, deren Enden die Eingänge und Ausgänge des Verteilers bilden, dadurch gekennzeichnet, daß zwei Gruppen (F0, F2, ... FN-2, F1, F3, ... FN-1) von je F/2 Lichtleitern gebildet werden, nämlich jedem zweiten Lichtleiter, daß die Gruppen schraubenlinienförmig mit gleichemn Wickelschritt, die eine Gruppe links und die andere rechts um einen Zylinder (1) gewickelt sind, wobei jeder Lichtleiter einer Gruppe die N/2 Lichtleiter der anderen Gruppe kreuzt, und daß ein Lichtleiter in den durch die Nummer $2^q$ definierten Kreuzungspunkten dieses Lichtleiters mit den N/2 Lichtleitern der anderen Gruppe an n Lichtleiter der anderen Gruppe gekoppelt ist, wobei q = 0, 1, 2, ..., (n-1) ist.

2. Optischer Verteiler nach Anspruch 1, dadurch gekennzeichnet, daß die beiden Lichtleitergruppen Maschen bilden und daß die Koppler entlang einer Maschendiagonalen parallel zu einer Manteillinie des Zylinders (1) gebildet sind.

3. Optischer Verteiler nach einem der Ansprüche 1 und 2, dadurch gekennzeichnet, daß die Enden eines Lichtleiters, die einen Eingang und einen Ausgang des Verteilers bilden, um einen halben Wickelschritt einer Schraubenlinie versetzt sind, und daß die Ausgänge die gleiche Reihenfolge wie die Eingänge haben.

4. Optischer Verteiler nach einem der Ansprüche 1, 2 und 3, dadurch gekennzeichnet, daß der Zylinder (1) Längsrillen (R0, R1, ... R31) und schraubenlinienförmige Rillen (RL1, ... RL8; RD1, ... RD8) aufweist, daß die Enden jedes Lichtleiters in den Längsrillen angeordnet sind, daß die Koppler in den Längsrillen angeordnet sind und daß die Lichtleiter zwischen den Eingängen und einer ersten Kopplerstufe, zwischen zwei aufeinanderfolgenden Kopplerstufen und zwischen einer letzten Kopplerstufe und den Ausgängen des Verteilers in den schraubenlinienförmigen Rillen angeordnet sind.

5. Vorrichtung zum Anschließen eines Eingangskabels (56) an ein Ausgangskabel (57), die die N Lichtleiter aufweist, über einen Verteiler nach Anspruch 4, dadurch gekennzeichnet, daß der Verteiler an einer Seite über einen Eintrittskabelkopf an das Eingangskabel (56) und an der anderen Seite über einen Ausgangskabelkopf an das Ausgangskabel (57) angeschlossen ist, wobei jeder Kopf aus einem Zylinderring (52; 53) und einem kegelstumpfförmigen Teil (54; 55) besteht, daß jeder Zylinderring durch Abtrennen des Zylinders (1) des Verteilers erhalten wird, der mindestens die Längsrillen aufweist, und daß die N Lichtleiter jedes Eingangs- und Ausgangskabels über ein jeweiliges kegelstumpfförmiges Teil verteilt sind, wobei die Enden der N Lichtleiter in den Längsrillen des mit dem kegelstumpfförmigen Teil verbundenen Rings angeordnet sind, und daß die Längsrillen der Zylinderringe und des Zylinders des Verteilers in Flucht liegen.

**Claims**

1. An N by N type optical diffuser where $N = 2^n$, having n stages (C1, C2, ... Cn) each comprising N/2 couplers, each providing coupling between two light ducts, said diffuser being made from N light ducts (F0, F1, F2, ... FN-1) whose ends constitute the inlets and the outlets of the diffuser, characterized in that the light ducts constitute two sets (F0, F2, ... FN-2, F1, F3, ... FN-1) of N/2 light ducts each, with each set being constituted by every other light duct, said sets being wound helically on a cylinder (1) in opposite directions and at the same pitch, with each light duct of either set crossing over the N/2 light ducts of the other set and with each light duct of either set being coupled to n of the light ducts of the other set at those cross-overs of said light duct with the N/2 light ducts of said other set having cross-over numbers $2^q$, where q = 0, 1, 2, ..., (n-1).

2. An optical diffuser according to claim 1, characterized in that the two sets of light ducts constitute a lattice and the couplers are disposed along respective mesh diagonals of the lattice parallel to a generator line of the cylinder (1).

3. An optical diffuser according to claim 1 or 2, characterized in that the ends of a light duct constituting an inlet and an outlet of the diffuser are offset from each other by one half of the helical pitch, and the outlets succeed one another in the same order as the inlets.

4. An optical diffuser according to any one of claims 1, 2, and 3, characterized in that the cylinder (1) includes longitudinal grooves (R0, R1, ... R31) and helical grooves (RL1, ... RL8; RO1, ... RO8), that the ends of each light duct are disposed in the longitudinal grooves, that the couplers are disposed in the longitudinal grooves, and that the light ducts are disposed in the helical grooves between the inlets and a first stage of couplers, between two successive coupler stages, and between a last stage of couplers and the outlets of the diffuser.

5. A device for connecting an inlet cable (56) to an outlet cable (57), of N light ducts each, by means of the diffuser according to claim 4, characterized in that said diffuser is connected at one end to said inlet cable (56) via an inlet cable head and at its other end to an outlet cable (57) via an outlet cable head, each of said cable heads being constituted by a cylindrical ring (52; 53) and a truncated cone (54; 55), each cylindrical ring being obtained by cutting up the cylinder (1) of the diffuser which is provided with at least the longitudinal grooves, in that the N light ducts of each inlet and outlet cable are distributed over a respective truncated cone, the N light ducts having ends disposed in the longitudinal grooves of the ring associated with the truncated cone, and in that the longitudinal grooves of the rings and the longitudinal grooves of the diffuser cylinder are in alignment.

FIG. 1

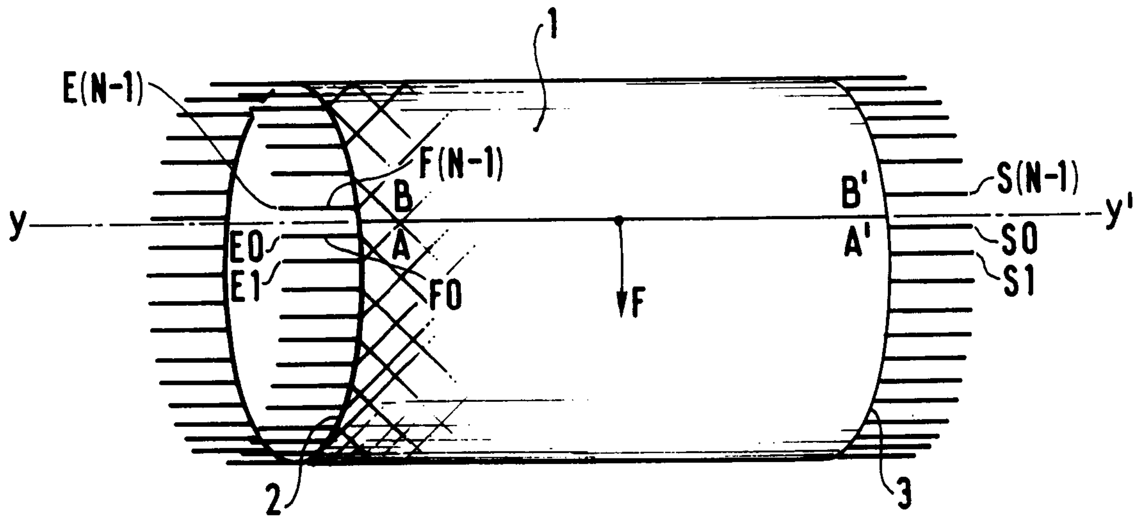


FIG. 4

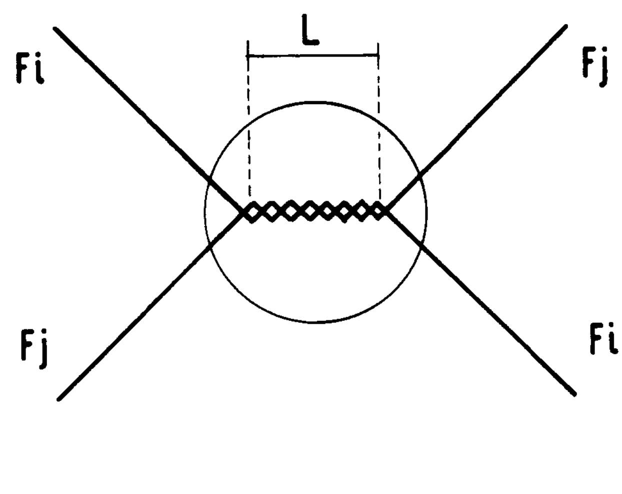

FIG. 2

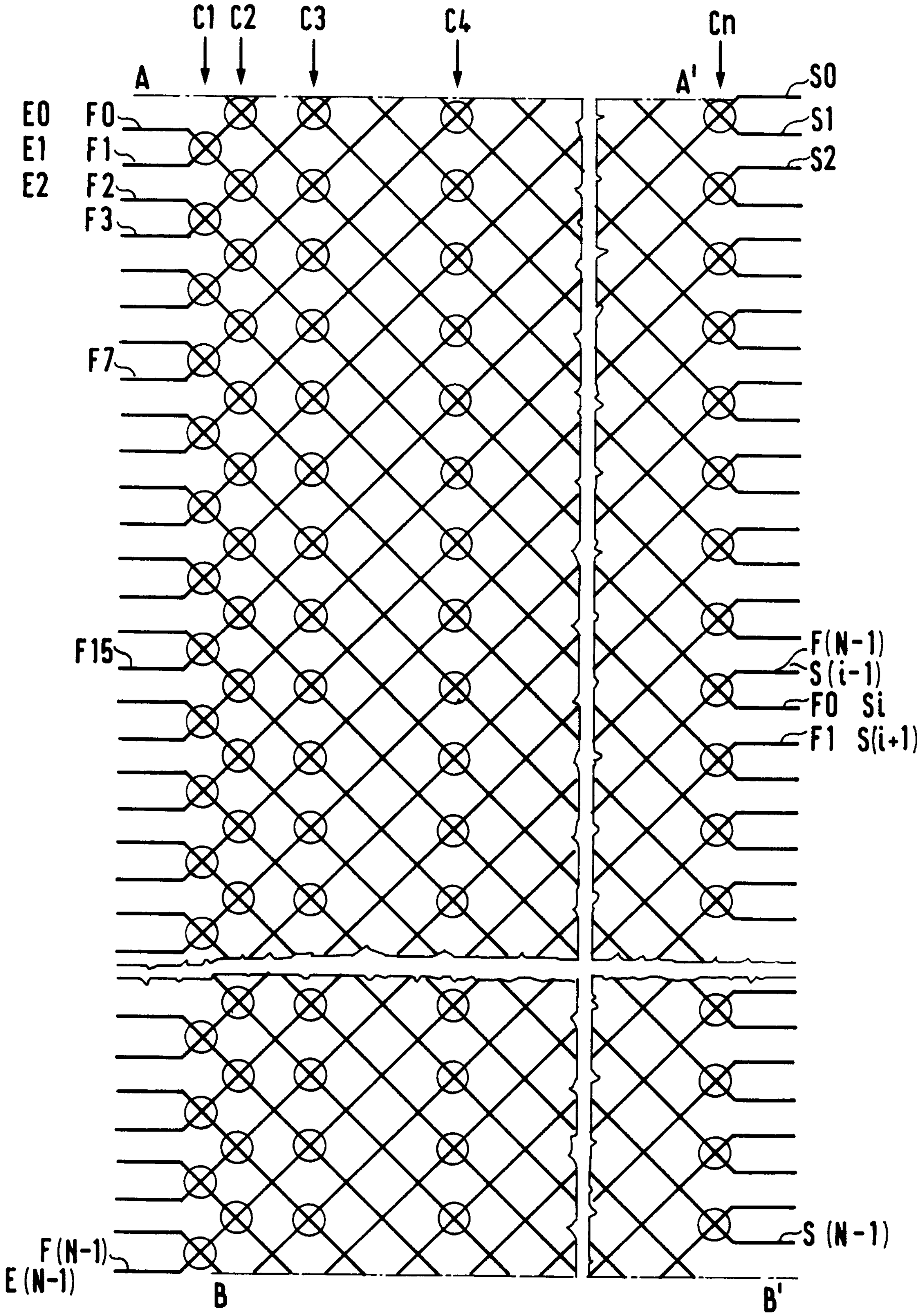
C1 C2 C3 C4 Cn
A A'
E0 F0
E1 F1
E2 F2
F3
F7
F15
F(N-1)
E(N-1)
B B'
S0
S1
S2
F(N-1)
S(i-1)
F0 Si
F1 S(i+1)
S(N-1)

FIG. 3

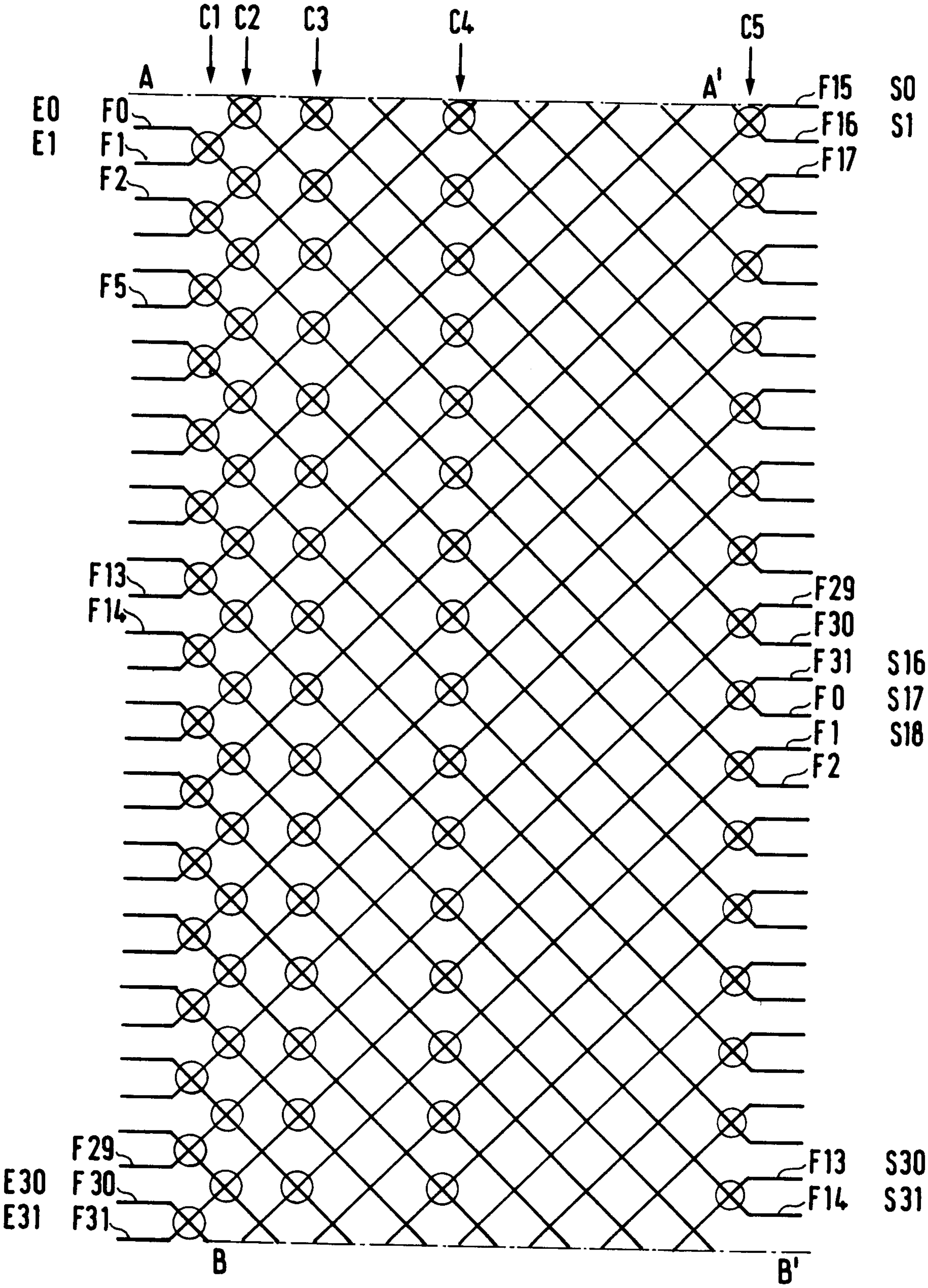
C1 C2 C3 C4 C5
A A'
B B'
E0 F0
E1 F1
F2
F5
F13
F14
F29
E30 F30
E31 F31
F15 S0
F16 S1
F17
F29
F30
F31 S16
F0 S17
F1 S18
F2
F13 S30
F14 S31

FIG. 5

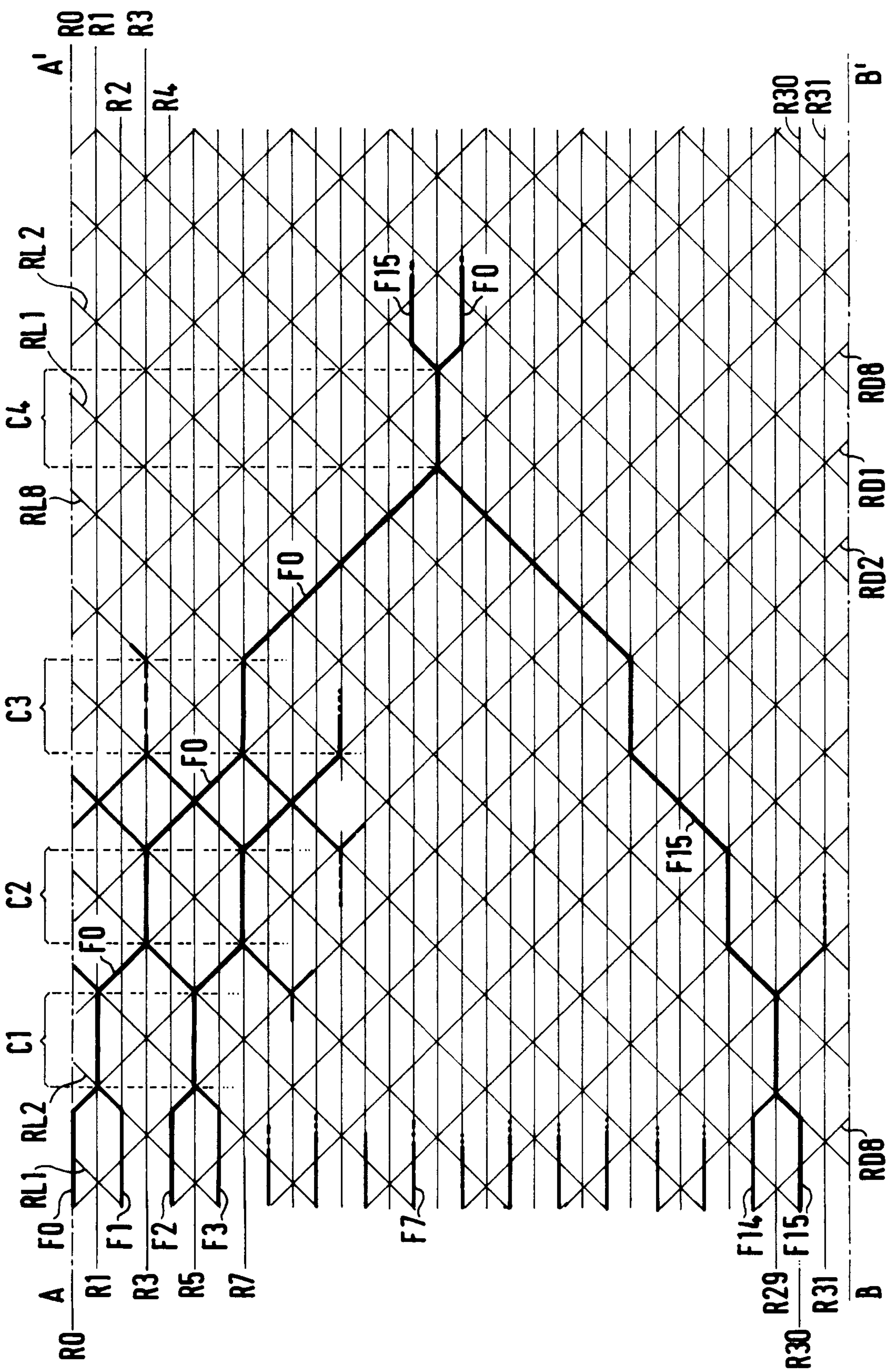

A
A'
B
B'
R0
R1
R2
R3
R4
R5
R7
R29
R30
R31
RL1
RL2
RL8
RD1
RD2
RD8
C1
C2
C3
C4
F0
F1
F2
F3
F7
F14
F15

FIG. 6

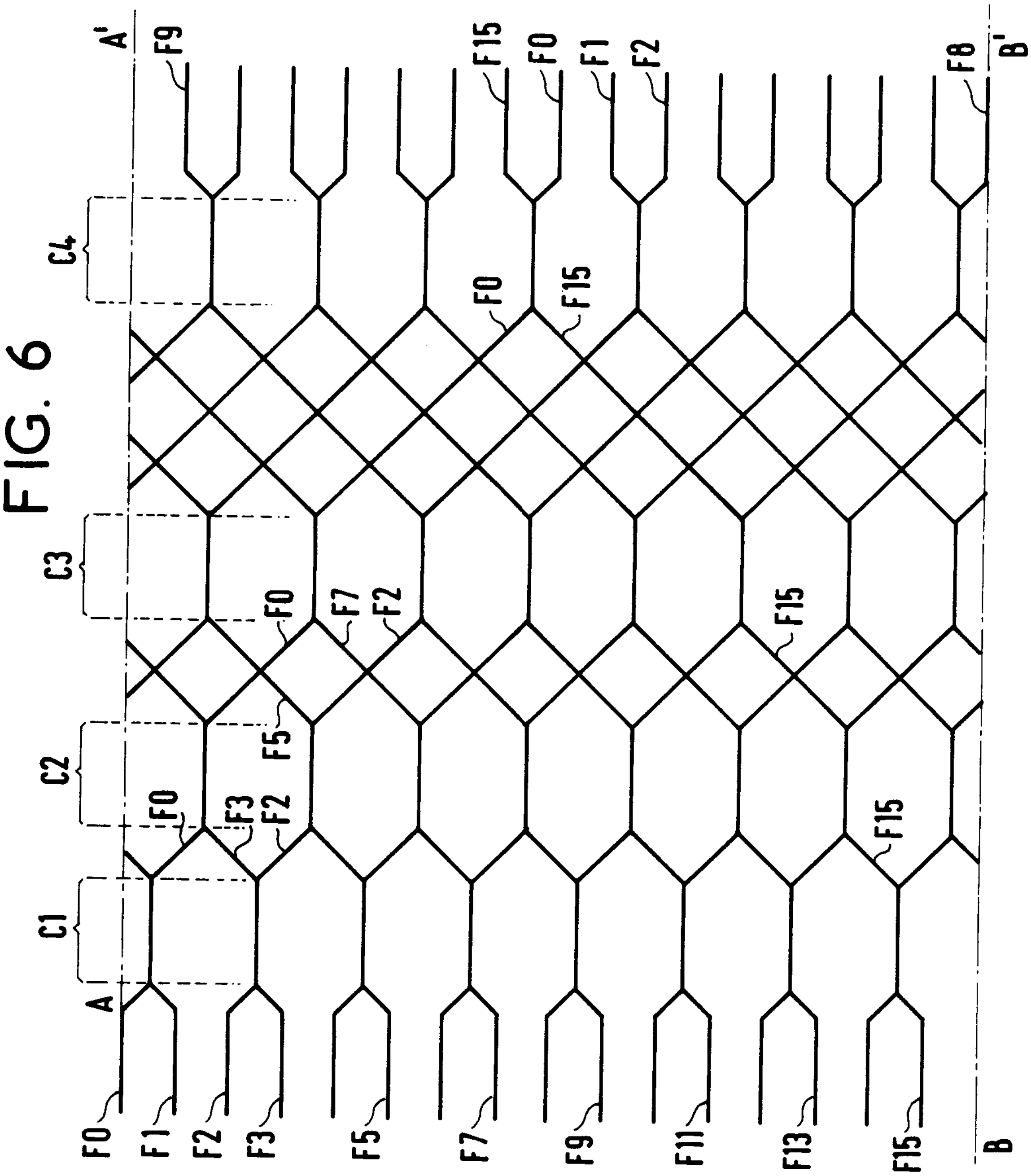

FIG. 7